# EUROPEAN PATENT APPLICATION

(11) **EP 0 805 370 A2**
(43) Date of publication of application: **05.11.1997**
(21) Application number: 97107265.7
(22) Date of filing: 02.05.1997
(51) Int. Cl.: G02C 5/22

(54) **A flexible hinge for eyeglasses**

(30) Priority: 03.05.1996 IT VI960076
(71) Applicant: Medil Ioma S.r.l., 36061 Bassano del Grappa (Vicenza) (IT)
(72) Inventor: Iacobacci, Luca, 36050 Monteviale (Vicenza) (IT)
(74) Representative: Bettello, Pietro, Dott. Ing.

(57) **Abstract**

A flexible hinge for eyeglasses is of the type which comprises a flexibility assembly interposed between the sidepiece (2) and the frame (4). This assembly is integral with the hinge (3) of the frame. This flexibility assembly (1) is constituted by a tubular element which has two ends. Portion (7) of sidepiece (2) is inserted at one end and it is made integral with the tubular element. At the other end of the tubular element is partially inserted a pin (8) in such a manner that it is able to move axially. In the interior cavity of the tubular element there is placed an elastic structure (9) which is preferably constituted by a spiral spring and the elastic element acts simultaneously on the two components portion (7) and pin (8).

## Description

### FIELD OF THE INVENTION

The present invention relates to a flexible hinge for eyeglasses according to the general part of claim 1.

### BACKGROUND OF THE PRIOR ART

It is well known that among the several types of frames for eyeglasses there are some which have sidepieces capable of flexible motion. This flexibility of the sidepiece is obtained by using a hinge provided with an elastic device, the hinge constituting the juncture point between sidepiece and the frontal part of the glasses.

The main structure of the elastic device is constituted by a spiral spring which is positioned in such a manner as to be under tension when the sidepiece on which it is applied, is rotated towards the exterior of the frame, in general beyond the position substantially perpendicular of the sidepiece with respect to the frame. This spring, after it is placed under tension, provides by reaction to bring the sidepiece back to the initial position when the spring is no longer acted on.

The tension of the spring is essentially obtained by means of an intermediate structure which in addition to containing in its interior the spring, is provided in the frontal end with an eyelet which constitutes one of the two components of the hinge for the disengagement of the sidepiece from the frame. This intermediate structure constructively is constituted by two parts which slide with respect one to the other in such a manner to permit the compression action and the action of distension of the internal spring. In particular the front part of the intermediate element provided with this eyelet is hinged on the frontal part of the frame while the rear part is anchored to the sidepiece and acts as a support for the sidepiece. A particular type of a flexible hinge is the one used in the frame commercially marketed with the phrase "Profile Ray-Ban" (registered trademark). This type of hinge consists of a first metallic element constituted by an eyelet provided with a tang which in turn partially engages itself in a sliding manner within the end of a second hollow structure essentially of a tubular shape. At the opposite end of this second hollow element is inserted and welded a portion of the front part of the sidepiece so that the same sidepiece constitutes a single body with the second element. In the internal cavity of the second element is placed a spiral spring which serves to connect the first element with the sidepiece. When the spring is under tension due to the fact that the same sidepiece is made to rotate beyond the 90° angle, the spring, by reaction, causes the sliding of the second element on the first element so that the desired elasticity of the hinge is achieved.

The characteristic which distinguishes the known hinge of the Ray-Bay type from the other types of hinges commonly being marketed is the manner in which the spiral spring is put in tension when the sidepiece is made to rotate towards the exterior beyond the 90° angle. This tension is obtained by means of the reciprocal contact between a portion of the second element and the end of the frame. In particular the frame is provided in the portion corresponding to the hinge with a planar surface inclined with respect to the direction of the sidepiece and placed radially with the same hinge which constitutes a ledge or a stopping point for the portion of the second element when the sidepiece is opened beyond the 90° angle. In this manner when the sidepiece is caused to rotate beyond the 90° angle there are activated simultaneously two rotation centers, the rotation center of the hinge and the rotation center corresponding to the point of contact or tangent between the same surface of the frame and the portion of the second element. The result is that in order to cause the sidepiece to rotate towards the exterior of the frame without causing a folding of the sidepiece, a sliding of the second tubular element on the tang of the first element placed in the interior must occur so that traction of the spring is generated. When the external action on the sidepiece ceases the spring by reaction shrinks so that the second tubular element reenters to the initial position.

Constructively the four elements which constitute the flexible sidepiece, that is the first element provided with the eyelet and the tang, the second tubular element within which the wire which constitutes the sidepiece is inserted and welded at one end, and the spiral spring are placed coaxially and partially in a telescopic fashion.

The drawbacks of this type of flexible hinge are due particularly to the complexity of the mechanical operations required to achieve the production of the hinges. In fact, the second element described hereinabove, although substantially of tubular shape, must be worked with devices capable of achieving a shaped portion which is the portion which comes in contact with the stopping surface of the the frame. Also difficult is the operation of connection of the two ends of the spring, specifically to the tang of the first element and to the end of the wire which constitutes the sidepiece.

In addition, it is necessary to provide a system for stopping the reciprocal sliding between the first and the second element, a fact which involves further mechanical operations which must be carried out precisely and this causes an increase in production costs.

A further drawback is due to the fact that since the second tubular element must contain in its interior the tang of the first element and the latter must serve as the hinge, so that it must have a strong structure, the dimensions of the second element become necessarily very substantial, a fact which is in conflict with the aesthetic appearance of this particular type of frame which, on the other hand, is characterized by a great simplicity and lightness in weight.

### SUMMARY OF THE INVENTION

The object of the present invention is to produce an elastic hinge to be applied to the frames of the type having the Profile "Ray-Ban" in which each individual component is easily made, the assembly operation is simple and quick and finally the dimensions of the entire hinge are obtained substantially smaller when compared with the hinges being marketed at present, in particular with respect to the wire which constitutes the sidepieces.

This object is achieved mainly by providing the entire device which permits the elasticity of the sidepiece welded to the end of the element which constitutes the eyelet of the hinge and this eyelet is advantageously of material already commercially available.

A second novel feature of the present invention resides in the fact that the helicoidal spring operates by compression so that it is not necessary that the spring be welded to the elements on which it is going to act.

A third novel feature of the invention resides in the fact that the two elements which reciprocally slide, that is the external tubular element and the cylindrical internal element are made of commercially available profiles. Finally, from the point of view of the function, the novel feature is due to the fact that with this constructive solution when the sidepiece is pushed towards the exterior beyond 90° degrees, the element which slides is only the central pin placed at the end of the sidepiece in the point tangent with the ledge of the frame while the external tubular element remains welded to the body of the hinge. This feature involves the use of a smaller force to be applied to the sidepiece which, being made of a metallic wire of a minimum diameter, is not bent during the opening operation.

The novel features described hereinabove and others of the present invention will be better understood by reference to possible embodiments which are provided by illustration of the invention and are not limited to them with the help of the accompanying drawings of which
- Fig. 1: is a perspective view of the frame provided with the hinges according to the present invention;
- Fig. 2: is a perspective view of the complete hinge partially in cross-section;
- Fig. 3: illustrates a view in cross-section of the hinge in the normal opening position;
- Fig. 4: is a view in cross-section of the hinge in the position of opening towards the exterior;
- Fig. 5: is a perspective exploded view of the hinge;
- Fig. 6: is a first embodiment of the hinge;
- Fig. 7: is a second embodiment of the hinge.

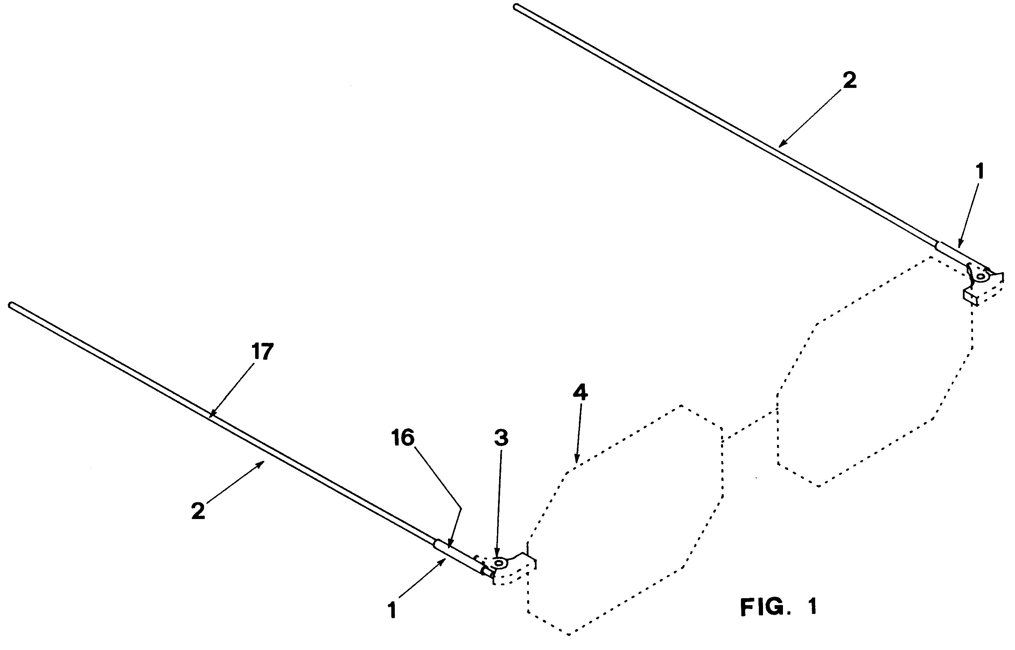

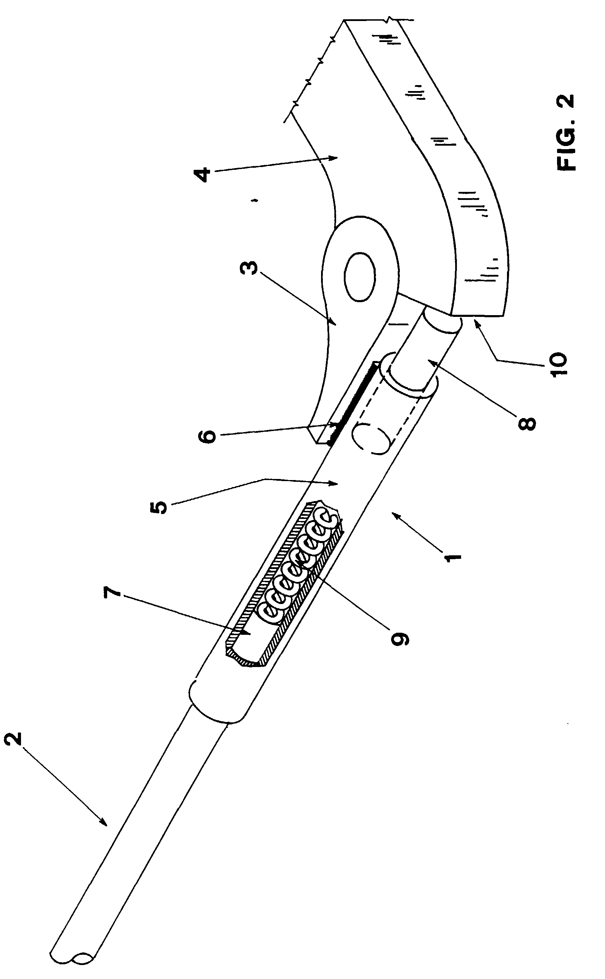

As shown in Fig. 1 the flexibility assembly (1) which provides an elastic motion to the sidepiece (2) is externally welded to the hinge (3) of frame (4). As shown in Figs. 2, 3 and 4 the flexibility assembly (1) is constituted by tubular element (5) which is welded in the points (6) to the rib of the hinge (3). At one end of the tubular element (5) is inserted a portion (7) of the end of sidepiece (2) so that the two structures are reciprocally blocked in a manner to constitute a single structure.

At the opposite end of the tubular element (5) is inserted a cylindrical pin (8) which has the possibility of sliding axially.

In the interior of the tubular element (5) is placed an elastic element (9) such as a spiral spring, which is always in contact both at the end (7) of the sidepiece (2) and with the sliding cylindrical pin (8).

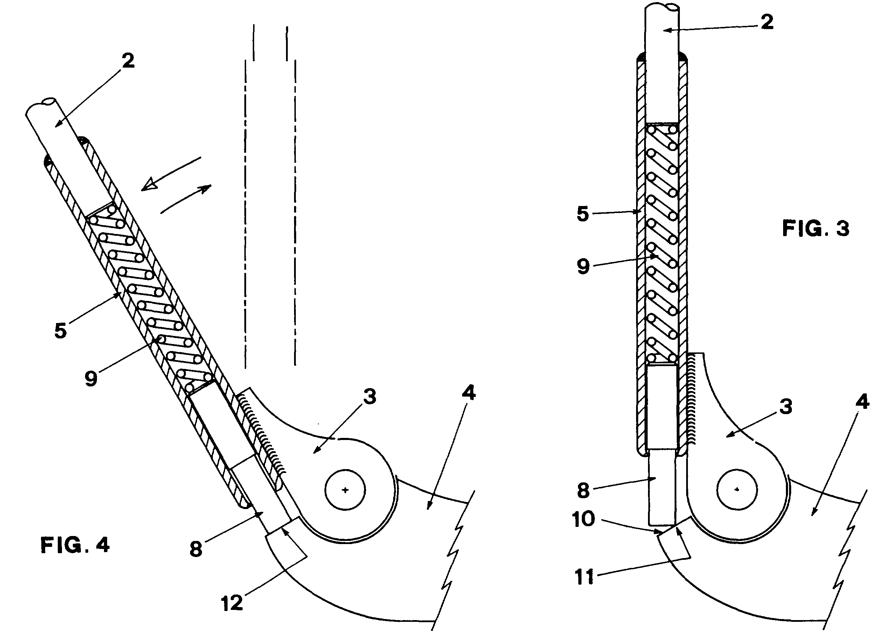

When the sidepiece (2) is in the position of normal opening, that is substantially perpendicular to the frame (4) as shown in Fig. 1, the pin (8) pushed towards the exterior by the action of spring (9) comes in a position in contact with the planar surface (10) which is present at the end of the frame and in a radial position and is also inclined with respect to the hinge (3). As shown by a comparison between Figs. 3 and 4, when the sidepiece (2) is drawn towards the exterior of the frame (4), the pin (8) which must remain always in contact with the inclined surface (10) and which initially is always in the tangental point (11) shown in Fig. 3 up to the point of total support (12), must slide and reenter the interior of tubular element (5). This reentry in the interior of tubular element (5) by the pin (8) causes the compression of the spring (9) which is under tension in such a manner that when the action on the sidepiece (2) ceases, the spring by reaction pushes the pin towards the exterior and brings back the sidepiece to the initial position.

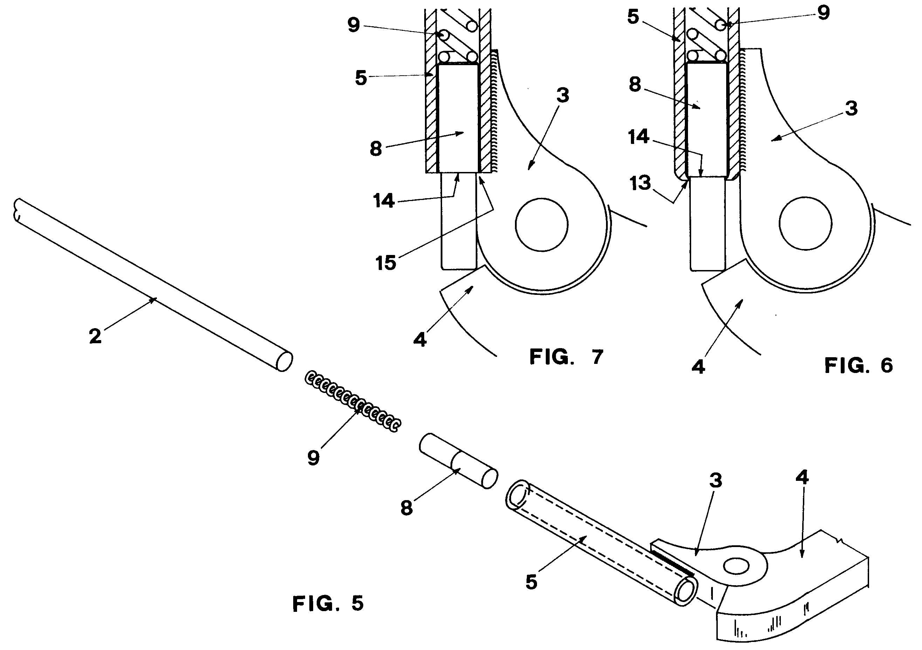

The operation of the entire flexible assembly (1) is particularly simple because as shown in Fig. 5 all the elements which constitute the flexible assembly are coaxial, so that after the tubular element (5) is welded along the lateral external rib of the body of the hinge (3), it is sufficient to insert in this element (5) first the pin (8), then the spring (9) and finally the portion (7) of the end of the sidepiece (2). This portion (7) is finally blocked to the tubular element (5).

In the flexibility assembly (1) there are provided constructive details which allow the axial sliding of the pin (8) and simultaneously prevent the total separation of the pin from the tubular element (5).

According to a first embodiment for the purpose of preventing the complete separation of pin (8) from the tubular element (5), a tapering operation is carried cut at the end of the tubular element (5) so that pin (8) is blocked in the place corresponding to a small increase of the diameter (14) as shown in Fig. 6. This embodiment is advantageous because it allows the entire flexibility assembly (1) to be mounted on hinges (3) of the type already commercially used.

According to a second embodiment the total separation of pin (8) from the tubular element (5) is prevented by forming a lowering along the rib of hinge (3) to obtain a lowered portion, the terminal part of the tubular element (5) rests on the lowered portion, so that a corner edge (15) is formed which comes in contact with the portion of greater diameter (14) of pin (8) and in this manner the separation of the latter from its partial containment is prevented.

As described hereinabove, the complete flexible sidepiece provided with the hinge (3) according to the invention is externally substantially as the cylindrical body (16), anchored to the frame (4) from which in the rear exits the wire (17) having a length suitable to form the sidepiece.

Advantageously the cylindrical body (16) and the wire (17) may be made with very reduced dimensions and the cylindrical body (16) may have a diameter of 1.5mm. This provides an aesthetic novel result with respect to similar eyeglasses being presently commercially made.

## Claims

1. In eyeglasses which comprise a frame (4), side-pieces (2) and hinges (3), each hinge being located between said frame and each sidepiece, characterized by the fact that each hinge is flexible and a flexibility assembly (1) is interposed between each sidepiece and the frame, said flexibility assembly (1) is integral with each hinge and is constituted by a tubular element (5), each said hinge having an external rib, said tubular element (5) being anchored on said external rib of each hinge and having two ends, each sidepiece (2) having a portion (7), said portion (7) being inserted at one end of said tubular element (5), said tubular element having an internal cavity, said portion (7) being integral with said tubular element (5), a pin (8) being partially inserted in the opposite end of said tubular element (5), said pin (8) being capable of sliding axially in said internal cavity of said tubular element (5), a spiral spring (9) being inserted in said tubular element (5) said spring acting simultaneously on said portion (7) and said pin (8).

2. The flexible hinge according to claim 1 characterized by the fact that said frame (4) has two ends, a surface (10) is formed on each end of said frame, said surface being inclined and radial with respect to said hinge that when said sidepieces (2) are in the normal opening position essentially perpendicular to said frame (4), said frame (4), said pin (8) is pushed by said spring (9) and is in contact with said surface (10).

3. The flexible hinge according to the preceding claims characterized by the fact that when said sidepieces are pushed beyond the portion of normal opening, said pin (8) remains always in contact with said surface (10), said surface (10) being inclined by action of said spring (9), said pin (8) reenters in the interior of said tubular element, and compresses said spring, said spring being under tension.

4. The flexible hinge according to claim 3 characterized by the fact that when the action on said sidepieces ceases, said spring (9) previously compressed and under tension extends and said sidepieces are brought back to the initial position of normal opening.

5. The flexible hinge according to claims 1 through 4 characterized by the fact that complete separation of said pin (8) from said tubular element after the action of said spring is prevented by tapering (13) the terminal part of said tubular element (5) to obtain a tapered portion, said tapered portion blocking the increased diameter (14) of said pin.

6. The flexible hinge according to claims 1 through 4 characterized by the fact that said tubular element has a terminal part, a lowering of said hinge (3) is carried out to obtain a lowered portion, said lowered portion acting as the support of said terminal part of said tubular element and a corner edge (15) is formed, said corner edge preventing the complete separation of said pin (8) from said tubular element and blocking said pin in the portion corresponding to an increase in diameter (14) of said pin.

7. The flexible hinge according to claim 1, characterized by the fact that said flexibility assembly (1) comprises said external tubular element (5), said pin (8), and said spring (9), said tubular element (5) said pin (8), and said spring (9) being coaxially disposed and independent one from the other.

8. The flexible hinge according to claim 1 characterized by the fact that said hinge (3) is anchored to said tubular element (5) by means of seam welding (6).

9. The flexible hinge, according to the preceding claims characterized by the fact that it contains externally a small body (16) of substantially cylindrical shape on each sidepiece, said body (16) being externally anchored to each of said hinges, and a wire (17) exits from the rear of each body, said wire (17) being of a reduced diameter, said wire constituting each of said sidepieces.
